# EUROPÄISCHE PATENTANMELDUNG

(11) **EP 2 381 199 A2**
(43) Veröffentlichungstag der Anmeldung: **26.10.2011**
(21) Anmeldenummer: 11003421.2
(22) Anmeldetag: 26.04.2011
(51) Int. Cl.: F26B 3/30, F26B 13/10

(54) **Verfahren und Vorrichtung zum Trocknen von Laminierfolien**

(30) Priorität: 23.04.2010 CH 5982010; 07.09.2010 DE 102010037373
(71) Anmelder: Steinemann Technology AG, 9015 St. Gallen-Winkeln (CH)
(72) Erfinder: Hari, Michael, 9512 Rossrüti (CH)
(74) Vertreter: Arat, Dogan

(57) **Zusammenfassung**

Trocknervorrichtung (5) zum Trocknen von Klebstoffen auf einer Folienbahn (10) in einer Bogenlaminiermaschine, wobei die Bogenlaminiermaschine mindestens eine Bogenzuführeinrichtung für die Zuführung eines bogenförmigen Trägermaterials, hier ausgebildet als ein Bogenanleger (1), aufweist.
Die Bogenlaminiermaschine weist ein Laminierwerk (3) auf, das mindestens zwei Laminierwalzen (4) beinhaltet, die gemeinsam einen Kaschierspalt bilden, wobei in dem Kaschierspalt unter Aufbringung von Druckkräften die bahnförmige Folienbahn (10), die in einem Folienmodul mit einer Folienabrollung (6) als endlose Bahn abgerollt wird, mit dem bogenförmigen Trägermaterial mittels eines mit der Trocknervorrichtung (5) vorgetrockneten Klebstoffs, der sich auf der Folienbahn (10) befindet, zu einem Laminat verbunden wird.
Die Trocknervorrichtung (5) weist ein Trocknergehäuse auf, das die Trocknervorrichtung (5) umschliesst, so dass durch das Trocknergehäuse selbst oder in Verbindung mit Maschinenelementen der Bogenlaminiermaschine ein weitgehend umschlossener Raum gebildet wird, durch den die mit dem Klebstoff beschichtete Folienbahn (10) geführt wird.
Die Trocknervorrichtung (5) soll mindestens einen Infrarotstrahler (9) aufweisen, der innerhalb des Trocknergehäuses angeordnet ist, und die Trocknervorrichtung (5) weist mindestens ein Stellmittel auf, welches eine Verlagerung des bzw. der Infrarotstrahler (9) relativ zu einer Substratoberfläche der Folienbahn (10) erlaubt.

## Beschreibung

Die Erfindung betrifft ein Verfahren zur Trocknung beim Wasserlaminieren, insbesondere zum Vortrocknen der mit einem Klebstoff versehenen Laminierfolien.

Die Erfindung betrifft eine Vorrichtung zur Trocknung beim Wasserlaminieren, insbesondere zum Vortrocknen der mit einem Klebstoff versehenen Laminierfolien.

Beim Wasserlaminieren oder Dispersionslaminieren wird eine relativ dünne und häufig temperaturempfindliche Folie aus Kunststoffmaterial von einer Rolle endlos abgenommen und einem Auftragswerk zur einseitigen Beschichtung mit einem wässrigen Klebstoff zugeführt. Die mit dem Klebstoff beschichtete Folie wird anschliessend einer Vortrocknung zugeführt. Die Vortrocknung soll dabei soweit vortrocknen, dass sie unter Druck fest auf dem Bogen anhaftet. Hierzu wird die Folie in einem Laminierwerk in einem Walzenspalt zwischen einer oberen Folienwalze (Laminierwalze, auch Kaschierwalze) und einer unteren Bogenwalze (Gegendruckwalze) geführt. In den Walzenspalt wird gleichzeitig mit der klebstoffbeschichten Folie ein zu laminierender Bogen eingeführt und infolge der Druckbeaufschlagung im Walzenspalt ein Laminat gebildet.

Nach dem Stand der Technik wird die Folie um eine beheizte Trommel herumgeführt und die klebstoffbeschichte Seite der Kunststofffolie mit einem Luftstrom beaufschlagt. Es sind Lösungen bekannt, bei der die Luftmenge und/oder die Temperatur des Luftstroms abhängig von der zugeführten Menge an Feuchtigkeit respektive der Maschinenleistung automatisch reguliert wird. Ein gattungsgemässer Vertreter eines solchen Trockenverfahren und der dazu gehörigen Vorrichtung ist unter anderem in der WO 2008/061378 offenbart.

In dem Forschungsbericht FKZ 170 43 03 (Prof. Dr.-Ing. Herzau, Dipi.-Ing W. Dieudonne, einsehbar unter www.foerderportal.bund.de nach Eingabe des Förderkennzeichens (FKZ) 1704303) wurde in umfangreichen Testreihen festgestellt, dass die Kombination von Strahlungserwärmung durch Infrarotstrahler mit Frischluftzufuhr die besten Trocknungsergebnisse erbringt. Infrarotstrahler haben eine hohe Oberflächentemperatur, so dass bei einem Maschinenstop oder bei verringerter Geschwindigkeit die Strahler die temperaturempfindliche Laminierfolie schädigen können. Laminierfolien weisen einen Dickenbereich zwischen 8 und 15µm auf, so dass bei einer zu starken Strahlungseinwirkung die Folie leicht gedehnt oder beschädigt werden kann. Die Beschädigung kann auch bei abgeschalteten Infrarotstrahlern erfolgen, da Lampengehäuse und Strahlungskörper immer noch eine hohe Restwärmestrahlung aufweisen. Ein einfaches Abschalten des Strahlers im Falle eines Maschinenstops ist daher nicht in allen Fällen ausreichend. Beschädigte Folienbahnen führen aber dazu, dass die Folienbahn aus dem Trocknerbereich entfernt und gegebenenfalls neu eingefädelt werden muss. Dies führt zu höheren Rüstzeiten und Produktionsunterbrechungen und den damit verbundenen negativen wirtschaftlichen Folgen.

Die Ergebnisse des Forschungsberichts zeigen, dass die Verringerung des Abstands zwischen der Strahlungsquelle und dem zu trocknenden Substrats von 100mm auf 20mm eine Effizienzsteigerung von 30% erbringt. Ein derart geringer Abstand führt aber bei den temperaturempfindlichen Folien im Falle eines Maschinenstops in den meisten Fällen fast unverzüglich zu einer Beschädigung. Bisher waren Leistungssteuerungen der IR- Strahler bekannt, bei denen die IR - Strahler im Bereich von 30 -100% der Strahlerleistung betrieben wurde. Effizienzreserven aus der Veränderung der Abständen zu dem zu trocknenden Substrat wurden aber bisher nicht genutzt bzw. mit dem Risiko der Beschädigung der Folienbahn im Falle eines Maschinenstopps erkauft.

Der Erfindung liegt die Aufgabe zugrunde, die Nachteile des Standes der Technik zu meiden und ein Verfahren zur Trocknung von Laminierfolien beim Wasserlaminieren, insbesondere zum Trocknen der mit dem Kleber versehenen Laminierfolie zu entwickeln, das eine bessere Leistungsanpassung, Energieeffizienz, gleichbleibende Trocknung bei veränderter Maschinengeschwindigkeit und somit eine optimale Laminatbildung ermöglicht.

Eine geeignete Trocknervorrichtung wird in dem Anspruch 1 beschrieben. Sinnvolle Weiterbildungen der Trocknervorrichtung ergeben sich aus den abhängigen Ansprüchen 2-4. Verfahren zu dem Betrieb einer solchen Trocknervorrichtung sind aus den Ansprüchen 5-7 zu entnehmen.

Durch eine Veränderung des Abstands zwischen der Folienbahn und dem bzw. den Infrarotstrahlern wird die Strahlungsenergie optimal genutzt. Der Abstand ist dabei in mindestens zwei Stufen wählbar, wobei eine Stufe, lnfrarotstrahler nahe am Foliensubstrat, für den Produktionsbetrieb vorgesehen ist, während eine zweite Stufe, Infrarotstrahler vom Foliensubstrat weiter entfernt, für den Fehlerfall bzw. Maschinenhalt vorgesehen ist. Der Abstand wird dabei von Maschinenereignissen abhängig gesteuert. Diese Ereignisse können Produktionsstart bzw. Produktionshalt und / oder Maschinengeschwindigkeit sein. Alternativ oder ergänzend kann der Abstand auch von der Temperatur des Foliensubstrats abhängig gewählt werden. Diese Temperatur kann durch Temperaturfühler oder berührungslose Temperatursensoren, die zur Messung der Temperatur des Foliensubstrats dienen, erfasst werden.

Die Erfindung wird nachfolgend in einem Ausführungsbeispiel anhand von Zeichnungen näher beschrieben:

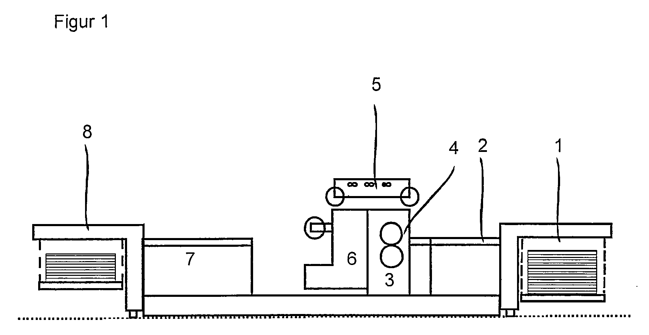

In den Zeichnungen zeigen die
- Figur 1:: Eine schematische Darstellung einer Maschine zum Wasserlaminieren

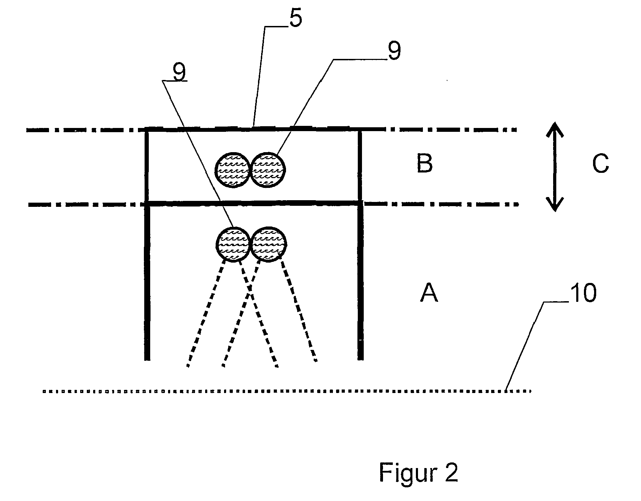

- Figur 2:: Eine schematische Darstellung der erfindungsgemäss gefundenen Lösung

Eine Maschine zum Wasserlaminieren umfasst unter anderem einen Bogenanleger 1, gegebenenfalls eine Einheit zur Bogenausrichtung und / oder Reinigung 2, eine Laminiereinheit 3 und eine Trenneinheit 7. Die. Laminiereinheit 3 beinhaltet unter anderem ein nicht dargestelltes Kleberauftragswerk zum wässrigen Auftragen des Klebstoffes auf die Folienbahn, ein Laminierwerk 6 mit einer Folienwalze und einer Bogenwalze (Gegendruckwalze), die gemeinsam den Laminierspalt (Kaschierspalt) bilden. In diesem Laminierspalt werden klebstoffbeschichtet Folie mit dem bogenförmigen Bedruckstoff unter Druck und gegebenenfalls Wärmeinwirkung zu einem endlosen Laminatband, bestehend aus den Bedruckstoffbogen und der Folienbahn verbunden. Das endlose Laminatband wird in der Trenneinrichtung wieder in einzelne Bogen aufgetrennt, die in einer Abstapeleinrichtung 8 abgelegt werden.

Eine Laminiermaschine weist auch einen Trockner 5 auf. Durch diesen Trockner wird die mit dem Klebstoff beschichtete Folienbahn geführt und der Klebstoff getrocknet, bevor dieser in dem Laminierspalt mit dem Bedruckstoff verbunden wird. Erfindungsgemäss weist dieser Trockner 7 mindestens eine Infrarot - Strahlungslampe auf.

Das Oberteil des Trockners 5, bestehend aus einem Gehäuse und mindestens darin befindlichen Infrarotstrahlern 9, befindet sich im Produktionsbetrieb in einer Lage A und wird zum Beispiel bei einem Maschinenstopp durch nicht dargestellte Stellmittel um den Weg C auf eine Ebene B gehoben. Diese erfindungsgemäss gefundene Lösung sichert, dass im Produktionsbetrieb die Infrarotenergie optimal genutzt werden kann, um den auf dem Foliensubstrat 10 befindliche Klebstoffschicht zu trocknen, während im Fehlerfall die Infrarotstrahler und das Gehäuse weit genug von dem empfindlichen Foliensubstrat 10 entfernt ist.

Die Steuerung der Abhebung des Trockners erfolgt durch die Auswertung von Maschinensignalen oder durch die direkte Ansteuerung der Stellmittel über die Maschinensteuerung. Stellmittel können elektrische Motoren, zum Beispiel Schrittmotoren, hydraulische oder pneumatische Stellmittel sein. Prinzipiell ist jedes geeignete Stellmittel einsetzbar, die eine Verlagerung des Trockneroberteils inklusive der Infrarotstrahler in mindestens zwei Lagen ermöglicht.

Die Infrarotstrahler können in einem zweiteiligen Trocknergehäuse mit dem Oberteil verbunden sein, wobei das Oberteil mit den daran befestigten Infrarotstrahlern durch die Stellmittel relativ zur Oberfläche der Laminierfolienbahn verlagert wird.

In einer weiteren Ausführung sind die Infrarotstrahler nicht mit dem Gehäuse verbunden, sondern werden innerhalb eines die Infrarotstrahler umschliessenden Gehäuses situationsabhängig durch geeignete Stellmittel verlagert.

In einer dritten Ausführung ist die Verstellung der Infrarotstrahler relativ zu der Substratoberfläche der Folienbahn in Stufen bzw. stufenlos wählbar. Dies kann durch geeignete pneumatische oder elektrische Stellmittel erreicht werden. In diesem Fall kann die Stellung der Infrarotstrahler relativ zur Substratoberfläche der Folienbahn abhängig von den Prozessparametern gewählt werden. Ein Prozessparameter könnte die Maschinengeschwindigkeit sein, d.h. die Infrarotstrahler werden mit steigender Maschinengeschwindigkeit näher an die Substratoberfläche der Folienbahn hin verlagert und bei sinkender Geschwindigkeit von dieser weg. Ein anderer geeigneter Prozessparameter kann die Temperatur der Folienbahn sein, die durch geeignete Temperatursensoren erfasst werden.

Die erfindungsgemäss gefundenen Lösungen können mit einer Leistungssteuerung der Infrarotstrahler verbunden werden. Zum Beispiel können gleichzeitig mit der Verlagerung weg von dem Foliensubstrat im Falle des Maschinenstopps die Infrarotstrahler ausgeschaltet werden. In einer von Prozessparametern (z.B. Maschinengeschwindigkeit, Folienbahntemperatur etc.) abhängigen Regelung kann die Leistung der Infrarotstrahler und der Abstand des Infrarotstrahler eine Regelungsgrösse sein. Die Regelung kann anhand von Berechnungsverfahren und / oder hinterlegten Kennlinienfeldern erfolgen.

Mit der erfindungsgemäss gefundenen Lösung kann eine energieeffiziente Trocknung einer wässrigen Klebstoffschicht auf einer Laminierfolienbahn erfolgen, ohne dass die Folienbahn in ihrer Struktur oder ihren Eigenschaften geschädigt wird.

### Bezeichnerliste

- 1: Bogenzuführeinrichtung, Bogenanleger
- 2: Ausrichtstation, Reinigungsstation
- 3: Laminierwerk
- 4: Laminierwalzen, Kaschierspalt
- 5: Trocknervorrichtung
- 6: Folienmodul mit Folienabrollung
- 7: Trennvorrichtung
- 8: Abstapler
- 9: Infrarotstrahler
- 10: Folienbahn

## Patentansprüche

1. Trocknervorrichtung (5) zu Trocknen von Klebstoffen auf einer Folienbahn (10) in einer Bogenlaminiermaschine, wobei die Bogenlaminiermaschine mindestens eine Bogenzuführeinrichtung für die Zuführung eines bogenförmigen Trägermaterials, hier ausgebildet als ein Bogenanleger (1), aufzeigt,
und die Bogenlaminiermaschine ein Laminierwerk (3) aufweist, das mindestens zwei Laminierwalzen (4) beinhaltet, die gemeinsam einen Kaschierspalt bilden, wobei in dem Kaschierspalt unter Aufbringung von Druckkräften die bahnförmige Folienbahn (10), die in einem Folienmodul mit einer Folienabrollung (6) als endlose Bahn abgerollt wird, mit dem bogenförmigen Trägermaterial mittels eines mit der Trocknervorrichtung (5) vorgetrockneten Klebstoffs, der sich auf der Folienbahn (10) befindet, zu einem Laminat verbunden wird,
und die Trocknervorrichtung (5) ein Trocknergehäuse aufweist, das die Trocknervorrichtung (5) umschliesst, so dass durch das Trocknergehäuse selbst oder in Verbindung mit Maschinenelementen der Bogenlaminiermaschine ein weitgehend umschlossener Raum gebildet wird, durch den die mit dem Klebstoff beschichtete Folienbahn (10) geführt wird, **gekennzeichnet dadurch, dass**
die Trocknervorrichtung (5) mindestens einen Infrarotstrahler (9) aufweist, der innerhalb des Trocknergehäuses angeordnet ist, und die Trocknervorrichtung (5) mindestens ein Stellmittel aufweist, die eine Verlagerung des bzw. der Infrarotstrahler (9) relativ zu einer Substratoberfläche der Folienbahn (10) erlaubt bzw. erlauben,

2. Trocknervorrichtung (5) nach Anspruch 1,
**gekennzeichnet dadurch, dass**
es sich bei den Stellmitteln zum Verlagern der Infrarotstrahler (9) relativ zu einer Substratoberfläche um pneumatische oder elektrische Stellmittel, wie z. B. Schritt- oder Linearmotoren, handelt,

3. Trocknervorrichtung (5) nach Anspruch 1 und 2,
**gekennzeichnet dadurch, dass**
das Trocknergehäuse zweiteilig ausgebildet ist, mit einem Ober- und Unterteil, und der bzw. die Infrarotstrahler (9) fest mit dem Oberteil des Trocknergehäuses verbunden ist bzw. sind und gemeinsam mit dem Oberteil des Trocknergehäuses mittels mindestens eines Stellmittels relativ zu einer Substratoberfläche der Folienbahn (10) verlagert werden kann bzw. können,

4. Trocknervorrichtung (5) nach Anspruch 1 und 2,
**gekennzeichnet dadurch, dass**
das Trocknergehäuse während des Laminierbetriebs ortsfest ist und die innerhalb des Trocknergehäuses befindliche bzw. befindlichen Infrarotstrahler (9) , die von Haltevorrichtungen gehalten werden, durch die Stellmittel relativ zu einer Substratoberfläche der Folienbahn (10) verlagert werden kann bzw. können,

5. Verfahren zum Betrieb einer Trocknervorrichtung (5) nach Anspruch 1 und 2 und einem der Ansprüche 3 oder 4,
**gekennzeichnet dadurch, dass**
sich der oder die Infrarotstrahler (9) während des Laminierbetriebes nahe der Folienbahn (10) befinden und im Falle eines Maschinenstopps von dieser weg verlagert wird bzw. werden, und diese Verlagerung abhängig von Signalen aus der Maschinensteuerung der Bogenlaminiermaschine erfolgt, die geeignete Stellmittel für die Verlagerung des bzw. der Infrarotstrahler (9) ansteuern,

6. Verfahren zum Betrieb einer Trocknervorrichtung (5) nach Anspruch 1 und 2 und einem der Ansprüche 3 oder 4,
**gekennzeichnet dadurch, dass**
sich die Verlagerung der oder die Infrarotstrahler (9) mittels geeigneter Stellmittel anhand von Maschinenzuständen, wie zum Beispiel die Produktionsgeschwindigkeit, erfolgt, und diese Verlagerung abhängig von Signalen aus der Maschinensteuerung der Bogenlaminiermaschine geschieht, die geeignete Stellmittel für die Verlagerung des bzw. der Infrarotstrahler (9) ansteuern,

7. Verfahren zum Betrieb einer Trocknervorrichtung (5) nach Anspruch 1 und 2 und einem der Ansprüche 3 oder 4,
**gekennzeichnet dadurch, dass**
die Laminiermaschine mindestens einen Temperatursensor zur Erfassung der Temperatur der Folienbahn (10) aufweist und die Stellung des oder der Infrarotstrahler relativ zu einer Substratoberfläche der Folienbahn (10) anhand von Signalen aus der Temperaturerfassung bzw. deren Auswertung in einer Auswerteeinrichtung bestimmt wird, wobei Signale generiert werden, die zur Ansteuerung geeigneter Stellmittel für die Verlagerung des bzw. der Infrarotstrahler relativ zur Substratoberfläche dienen.
